# EUROPEAN PATENT SPECIFICATION

(11) **EP 0 407 849 B1**
(45) Date of publication and mention of the grant of the patent: **23.04.1997**
(21) Application number: 90112581.5
(22) Date of filing: 02.07.1990
(51) Int. Cl.: G05B 19/05, G06F 9/44

(54) **Programming method and programming unit for programmable controller**
Verfahren und Vorrichtung zur Programmierung eines programmierbaren Steuergerätes
Méthode et dispositif pour programmer une unité de commande programmable

(30) Priority: 10.07.1989 JP 177601/89; 10.01.1990 JP 2863/90
(43) Date of publication of application: 16.01.1991
(73) Proprietor: MITSUBISHI DENKI KABUSHIKI KAISHA, Tokyo 100 (JP)
(72) Inventor: Iida, Naomi c/o Mitsubishi Denki K.K., Higashi-ku Nagoya-shi Aichi (JP); Onishi, Sakuyuki c/o Mitsubishi Denki K.K., Higashi-ku Nagoya-shi Aichi (JP)
(74) Representative: Lehn, Werner, Dipl.-Ing.

(56) References cited:
- EP-A- 0 317 477
- GB-A- 2 077 966
- IEEE CONFERENCE RECORD OF 1987 THIRTY-NINTH ANNUAL CONFERENCE OF ELECTRICAL ENGINEERING PROBLEMS IN THE RUBBER AND PLASTICS INDUSTRIES 6 April 1987, AKRON, OHIO, US pages 14 - 19; J. SHANLEY: 'TRENDS IN PROGRAM DEVELOPMENT SOFTWARE FOR PROGRAMMABLE CONTROL SYSTEMS'

## Description

### BACKGROUND OF THE INVENTION

The present invention relates to a programming apparatus and a programming method for a programmable controller. They are used to write sequence programs using both basic program instructions and application instructions which are not provided as basic program instructions.

GB 2 077 966 A discloses, that a table is stored at the beginning of a cassette tape. A processor reads out the table which is stored at the beginning of the cassette tape. The table is, however, registered in the system program supplied by a maker and therefore it is difficult to add a new symbol (command). Namely, due to the rigid use of the table stored at the beginning of a cassette tape, this document only indicates the usage of a kind of symbol table, however, no specific setup and inclusion in the execution program is intended here. Hence, it is difficult to add new commands to a sequence program.

EP 0 317 477 relates to a software management structure and this structure can constitute a program by referring to specific subprograms. The structure only defines a rigid positioning of an application program, e.g. a WORD PROCESSING in the system library (location). However, the library allocation definition of such application programs have no relationship with a symbol table. Therefore, there is only disclosed a method for forming a package system, where the application programs keep their storage in the libraries and are not included in the sequence program.

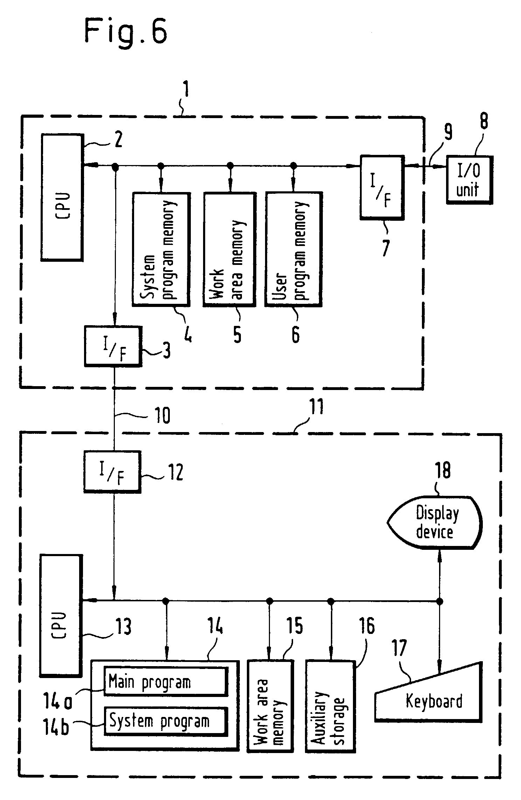

Fig. 6 shows the general configuration of a programmable controller (hereinafter referred to as a "PC") and a programming unit of the type used in the prior art. In Fig. 6, the controller unit 1 includes the main sections of the PC, *i.e.* a central processing unit (hereinafter referred to as the "CPU") 2, an interface 3 to a programming unit 11 which will be discussed later, a memory 4 for storing the system program, a work area memory 5 used in executing the aforementioned system program, a memory 6 for storing user programs, and an interface 7 for inputs/outputs. An I/O unit 8 inputs external information and outputs the operation results of the CPU 2, a coupling means 9 connects the I/O interface 7 and the I/O unit 8, and a cable 10 connects the interface 3 and the programming unit 11. The unit 11 used with the above PC comprises an interface 12, a CPU 13, a system program memory 14, a work area memory 15, an auxiliary storage 16 including an (unillustrated) floppy disk and floppy disk drive, which serves as an auxiliary memory area for storing application instruction execution programs corresponding to the above mentioned application instructions, a keyboard 17, and a display device 18.

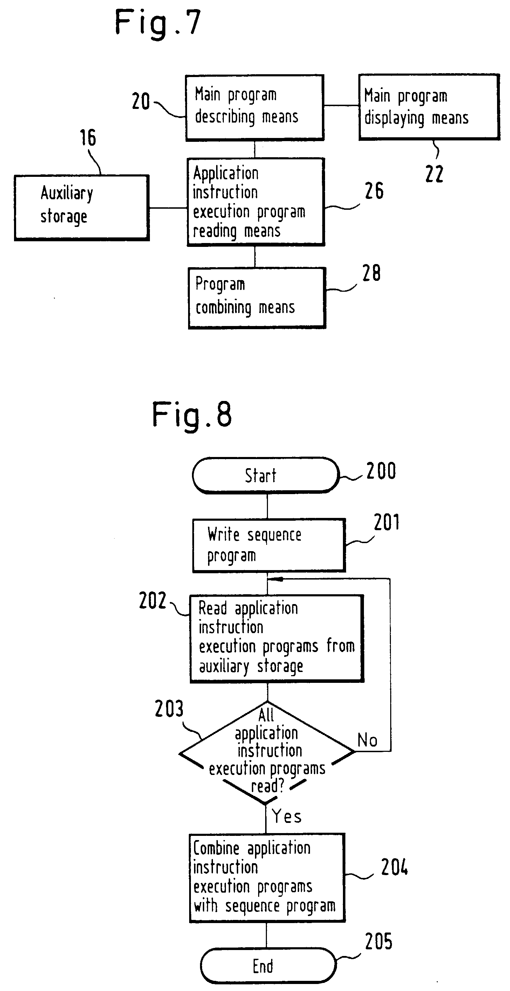

Fig. 7 is a block diagram showing the main functions of the programming unit 11 of the prior art. The function blocks may be appropriately termed either as "tasks" or as "means". The latter terminology will be employed herein. The functional means (tasks) are performed/exhibited when the system program stored in the system program memory 14 is run by the CPU 13. In Fig. 7, the numeral 20 indicates a main program describing means for describing a sequence program. At 22 is a main program display means for causing the sequence program. described by the main program describing means 20 to be displayed on a screen of the display device 18 in Fig. 6. At 26 is an application instruction execution program reading means for reading the application instruction execution programs corresponding to the application instructions used in the above sequence program for the auxiliary storage 16. Finally, 28 indicates a program combining means for combining the read-out application instruction execution programs with the sequence program.

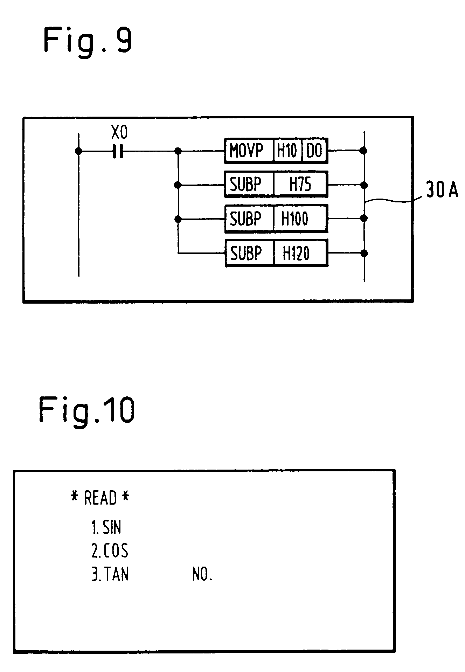

Fig. 8 is a flowchart showing the processing procedure of sequence program writing in the prior art. According to this flowchart, an operator starts up the programming unit 11 shown in Fig. 6 at step 200. At Step 201 the operator writes a sequence program from the keyboard 17. The program is displayed on the display device screen at the same time. Namely, the main program describing means 20 in Fig. 7 creates a sequence program 30A as represented by the ladder diagram shown in Fig. 9 in accordance with data, basic instructions and application instructions entered from the keyboard 17 in Fig. 6 and stores it in a main memory area 14a of the system program memory 14 and also displays it in ladder form on the display device 18 through the main program displaying means 22. The application instructions are each indicated in the above sequence program 30A, as shown in, for example, the program segment of Fig. 9, by subprogram operation codes, for example "SUB" or "SUBP" ("P" indicates a one time command) and the head absolute address, e.g. H75, H100, H120, of the memory area which will store the application instruction execution programs corresponding to the application instructions, in order to call subroutines. At step 202, the operator selects and reads out the application instruction execution programs which execute the application instructions he wishes to use in the sequence program 30, *e.g.* sine "SIN", cosine "COS", tangent "TAN", *etc.* The desired programs are read out one by one from among those stored in the auxiliary storage means 16 through the application instruction execution program reading means 26. This is essentially a manual task on the part of the operator. That is, the operator must access the auxiliary storage where the instruction execution programs are stored, typically on a disk, and, using the disk directory, must specify the desired program. The actual program is then read out. It will ultimately be stored in the memory starting at the designated address (*i.e.* H75, etc.). The names "SIN", "COS" and "TAN" appear on the display device screen as shown in Fig. 10 as the instruction execution programs are designated. At step 203, the operator judges whether all the application instruction execution programs required for the given sequence program 30 have been read or not. If the answer is no, he returns to step 202. If all the programs have been read out, the operator combines the above application instruction execution programs with the sequence program 30 stored in the main memory area 14a of the system program memory 14 using the program combining task 28, at step 204, thus completing construction of sequence program. The completed sequence program is then transferred from the programming unit 11 to the user program memory 6 in the controller unit 1 via the cable 10 in Fig. 6 and is used as a PC sequence program.

Because the programming unit 11 of the prior art is configured as described above, programming is extremely troublesome, *i.e.* it is necessary for the user to manually specify, one by one, the application instruction execution programs corresponding to the application instructions, since the application instructions are not available as basic program instructions, in reading the above application instruction execution programs from the auxiliary storage 16. It is also necessary for the operator to prompt the unit to combine the read-out application instruction execution programs with the sequence program, to complete the sequence program. It is easy for the operator to make a mistake in specifying the head address where the execution program will be found, i.e. to subsequently put the execution program in a memory location other than that designated. Further, since the operator may not have at hand information on the size of the execution program he wishes to use, he may space subsequent execution programs too far apart and use the memory inefficiently.

Thus, the object of the present invention is clearly identified as
- providing a programming apparatus and a programming method for a programmable controller that allow to efficiently define a sequence program including basic program instructions and application instructions.

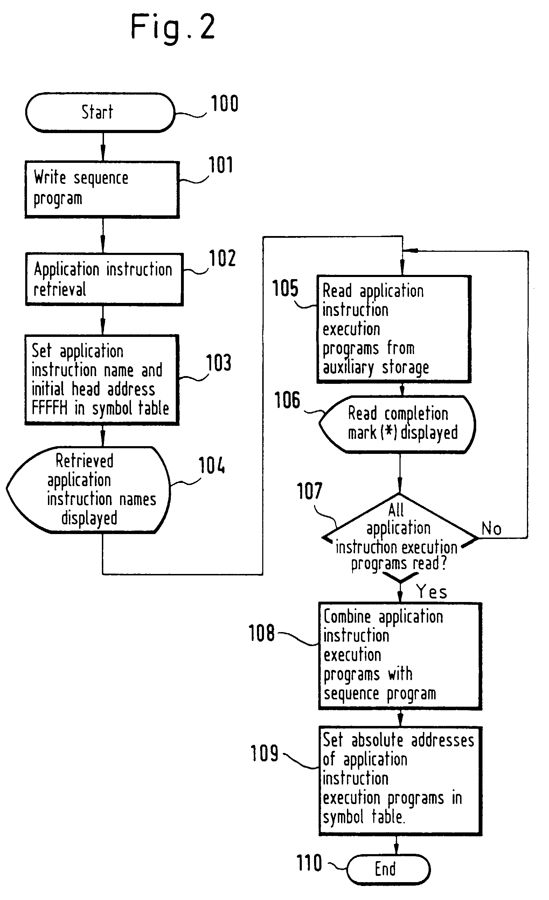

This object is solved by a programming apparatus of claim 1 and a programming method of claim 6, respectively. In the present invention according to claims 1 and 6, a title (symbol) such as "SIN" is written as the application command, so that the application command can be easily imaged. As is seen in step 101 in Fig. 2, there are specified common names for application instructions. Subsequently, a symbol table is prepared and a dummy address is written into this table. Such a table follows the sequence program, i.e. the symbol table itself is part of the sequence program. The advantage of the usage of such a symbol table is to easily add the application command of the sequence program. The application command is defined as the symbol and the symbol of the new application command is added in the symbol table, so as to add the new application command. Therefore, in the solution of the object, in order to add a new application command, a system program executing the sequenc program retrieves a symbol registered in the symbol table and the address where the corresponding processing beginning is registered. Since the system program has no concern as to the content of each application command, it is not necessary to change the system program. Thus, the possibility of specifying a wrong absolute address for an application instruction execution program is ensured, since the sequence program is written using only the application instruction common name. With the symbol table itself forming part of the program and containing the header addresses of the read common application execution programs, ease of writing the sequence program is achieved and no specification of the explicit head absolute addresses as in the above explained Fig. 9 is necessary.

Thus , such a programming apparatus and a programming method allow application instructions used in a sequence program to be detected automatically, and corresponding application instruction execution programs to be automatically read from an auxiliary storage and combined with the sequence program.

Therefore, in one aspect the programming method includes the step of describing application instructions by their common names when writing a sequence program using application instructions unavailable as basic program instructions, the step of retrieving the application instructions in the sequence program by their names, and the step of automatically reading the application instruction execution programs corresponding to the application instructions from an auxiliary storage and combining the read programs with the sequence program.

Therefore, in another aspect the programming apparatus is equipped with an application instruction describing means for describing application instructions, which are not provided as basic program instructions, by their names in writing a sequence program, an application instruction retrieving means for retrieving the application instructions in the sequence program by means of those names, an application instruction execution program reading means for automatically reading the application instruction execution programs, corresponding to the application instructions retrieved by the above application instruction retrieving means, from the auxiliary storage, and a program combining means for combining the read-out application instruction execution programs with the sequence program. Further advantageous embodiments and improvements of the invention may be taken from the dependent claims.

### BRIEF DESCRIPTION OF THE DRAWINGS

Fig. 1 is a block diagram indicating the chief functions of a programming apparatus according to one embodiment of the present invention;
Fig. 2 is a flowchart showing a sequence program writing process performed via the programming apparatus illustrated in Fig. 1;
Fig. 3 shows an example of a part of a sequence program written by the programming apparatus illustrated in Fig. 1 as displayed on the display screen;
Fig. 4a shows an example of a display screen indication showing the application instructions retrieved from the sequence program segment illustrated in Fig. 3;
Fig. 4b shows an example of a display screen indication that the application instruction execution programs corresponding to the application instructions shown in Fig. 4a have been read from the auxiliary storage;
Figs. 5a to 5c illustrate a method of combining the application instruction execution programs with the sequence program;
Fig. 6 is a block diagram indicating the general hardware configuration of a conventional programmable controller and programming apparatus which is also common to the embodiment of the present invention;
Fig. 7 is a block diagram showing the chief functions of the programming apparatus of Fig. 6;
Fig. 8 is a flowchart showing a sequence program writing process using the programming apparatus of Fig. 6;
Fig. 9 shows an example of a display screen indication of a sequence program written by the programming apparatus illustrated in Fig. 7;
Fig. 10 shows an example of a display screen indication of the application instruction execution programs read by the programming apparatus of Fig. 7;
Fig. 11 is a block diagram showing the functional outline of a further embodiment of the invention;
Fig. 12 is a flowchart similar to that of Fig. 2, showing the processing conducted in this embodiment; and
Fig. 13 illustrates the function of head address rewriting.

In the figures, the same symbols indicate the same or similar elements.

### DESCRIPTION OF THE PREFERRED EMBODIMENTS

In the invention, application instructions are described using their common names in writing a sequence program, the application instructions in the sequence program thus written are picked out by their names, and application instruction execution programs corresponding to the retrieved application instructions are automatically read from the auxiliary storage and combined with the sequence program.

According to the apparatus of the invention, the application instruction describing means describes the sequence program using the common names of application instructions which are not provided to the programmable controller as basic program instructions, the application instruction retrieving means picks out the application instruction from the sequence program by means of these names, the application instruction execution program reading means automatically reads the corresponding application instruction execution programs for executing the retrieved application instructions from the auxiliary storage, and the program combining means combines the application instruction execution programs with the sequence program.

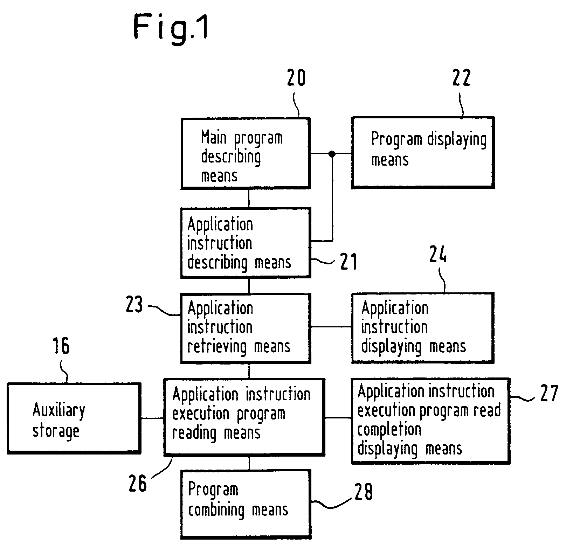

Embodiments of the invention will be explained according to Figs. 1 through 6 and 11-13. In the first embodiment, the hardware of the PC and the programming unit are the same as those shown in Fig. 6. The portions represented by the same symbols as in the prior art are the same or similar to those in the prior art.

Fig. 1 is a block diagram which indicates the main functional means or tasking of the programming unit 11 in the embodiment of the present invention. As in Fig. 7, various means are employed in the system program stored in the system program memory 14 in Fig. 6 and their functions are exhibited when the system program is executed by the CPU 13. Referring to Fig. 1, the numeral 21 indicates the application instruction describing means (task) for describing the application instructions, which are not included in the basic program instructions of the PC, by means of their common names when writing the sequence program. At 23 is the application instruction retrieving means or task which picks out the application instructions embedded in the sequence program. The application instruction displaying means (task) 24 displays the retrieved application instructions on the screen of the display device 18 in Fig. 6. Application instruction execution program reading means (task) 26 reads those application instruction execution programs that correspond to the displayed application instructions from the auxiliary storage 16, which acts as the auxiliary memory shown in Fig. 6. Application instruction execution program read completion displaying means (task) 27 causes display of an indication of the completion of the reading of the designated application instruction execution programs.

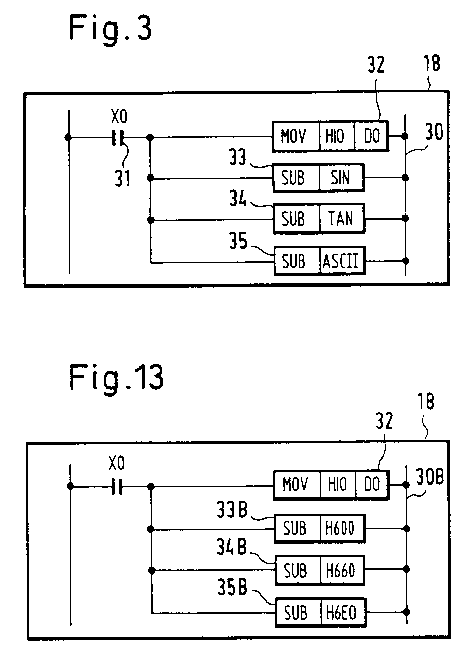

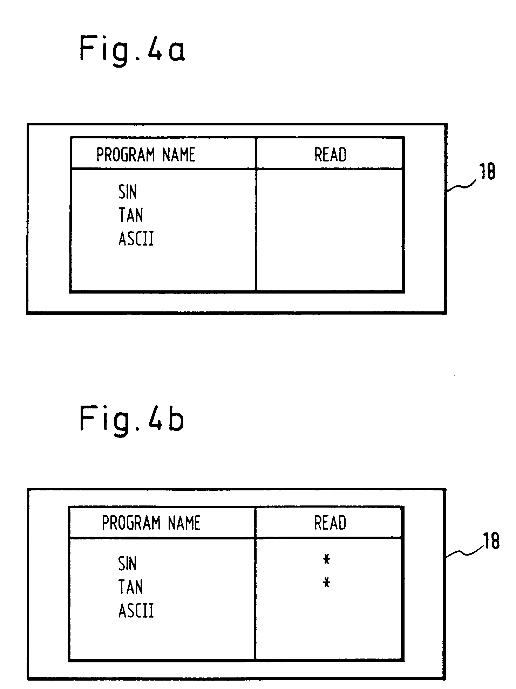

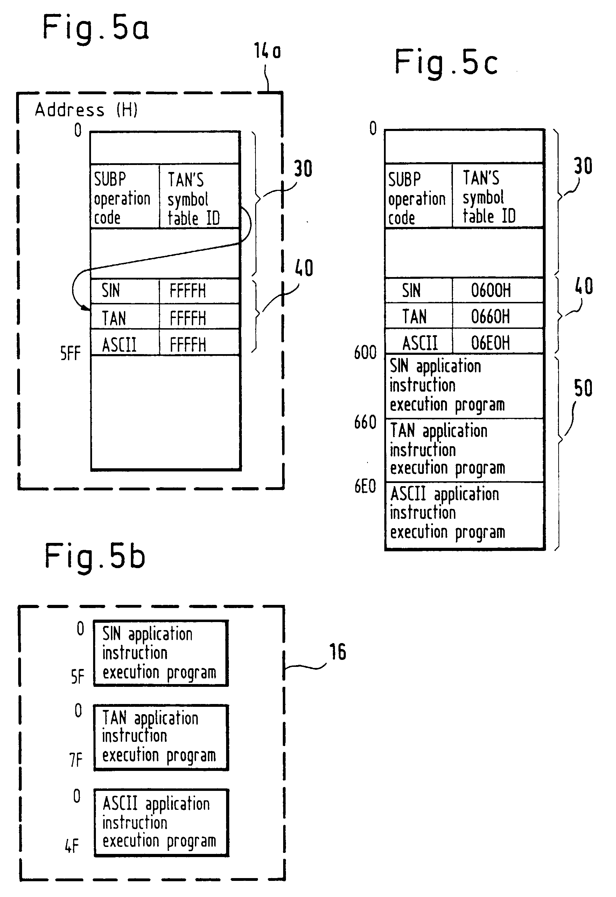

Fig. 2 is a flowchart showing a sequence program write processing procedure according to this embodiment of the present invention. The sequence program writing procedure will be explained according to this flowchart. The operator starts up the programming unit 11 at step 100. At step 101, he writes a sequence program in which, when special application instructions are required, simply include the common names of the application instructions used. This step is performed employing the sequence program describing means 20 and the application instruction describing means 21 shown in Fig. 1. The seqence program is caused to be displayed on the screen of the display device 18 in Fig. 6 via the sequence program displaying means 22. Fig. 3 gives an example of a portion of a sequence program screen display in which the various application instructions (here, "SIN", "TAN" and "ASCII") are indicated by displaying their common names. That is, the application instructions are described by subprogram operation codes such as "SUB" or "SUBP", and the application instruction names "SIN", "TAN" and "ASCII" appear instead of the absolute addresses of the memory where the application instruction execution programs will be stored. At step 102, the special application instructions appearing in the sequence program are picked out automatically by the application instruction retrieving means 23 shown in Fig. 1. At step 103, at a point after the sequence program in the main program area 14a of the system program memory 14 shown in Fig. 6, a symbol table as shown in Fig. 5a is prepared. The symbol table stores the application instruction names as well as the head addresses where the corresponding instruction execution programs will be found. As the actual head addresses are still unknown at this time, FFFFH is set as the initial value of the addresses storing the application instruction execution programs, which will be read at a latter step. This address is simply a dummy address which will be replaced later on as indicated. At step 104, the system then causes the display of the retrieved application instruction names, *e.g. "SIN*.*"* "TAN" and "ASCII" as shown in Fig. 4a, on the display device (18) screen, using the application instruction displaying means 24 shown in Fig. 1. In step 105, the application instruction execution programs corresponding to the above application instructions are read from the auxiliary storage 16 using the application instruction execution program reading means 26 shown in Fig. 1. All that is necessary is for the system to be able to find the programs. In the case of disk storage, this requires the operator to insert the disk including the designated program or programs ("SIN", *etc.)* into the drive. At step 106, when the reading of each application instruction execution program is complete, a "*" mark is displayed in the corresponding "READ" column on the screen of the display device 18 as shown in Fig. 4b, using the application instruction execution program read completion displaying means 27 illustrated in Fig. 1. If reading of all the corresponding application instruction execution programs is not yet complete at step 107, control is returned to step 105 and steps 105 and 106 are repeated. If reading of the above application instruction execution programs is complete, control progresses to step 108 where the read application instruction execution programs are combined with the sequence program. That is, the application instruction execution programs for, e.g. "SIN", "TAN" and "ASCII" are stored following the symbol table, which itself follows the sequence program in the main program area 14a of the system program memory 14. In step 109 the first absolute addresses of the application instruction execution programs corresponding to the respective application instructions "SIN", "TAN" and "ASCII" are stored as shown in Fig. 5c. The program may be stored at any point in the memory where it is efficient to do so. The head addresses of the respective programs are noted at the time of their writing into the system program memory, and are used to replace the dummy addresses entered in step 103.

It will be apparent that in the embodiment described above, ease of writing a sequence program without the possibility of specifying a wrong absolute address for an application instruction execution program is ensured because the sequence program is written using only the application instruction name. The application instructions in the sequence program are automatically picked out, application instruction execution programs corresponding to the application instructions are read from the auxiliary storage and combined with the above sequence program, and the head addresses are set automatically.

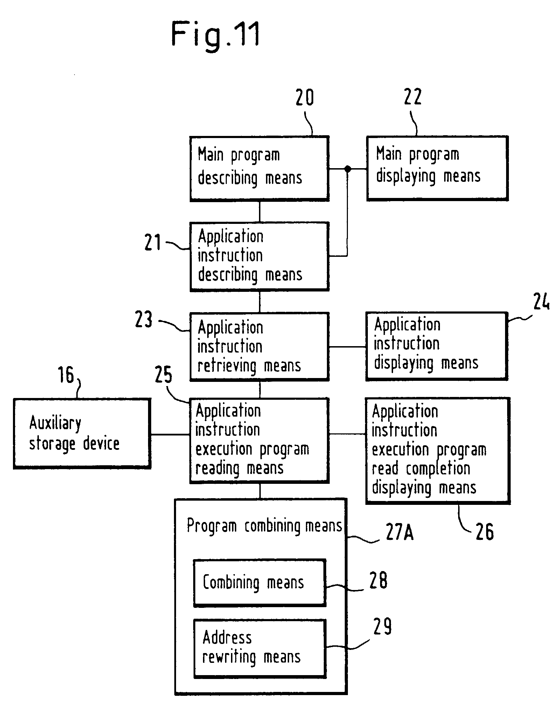

A further embodiment of the present invention is illustrated in Figs. 11 to 13. Fig. 11 is a block diagram showing the main functions or means provided in the programming device of this embodiment. As illustrated in Fig. 11, this embodiment includes a program combining means 27a which includes a combining means 28 which is similar in function to the program combining means 27 shown in Fig. 1, and an address rewriting means 29 which rewrites the application instruction names described in the sequence program as absolute head addresses in the main storage area where the application instruction executing programs are to be found.

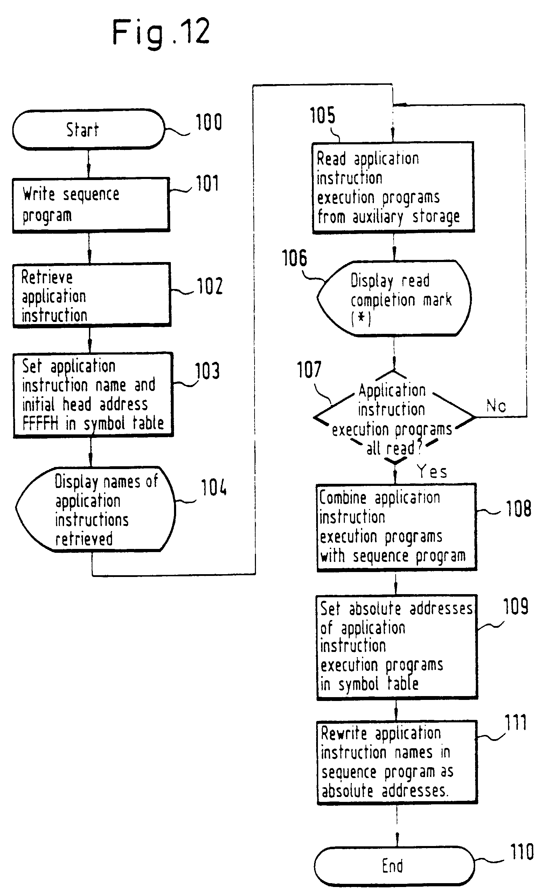

The operation of this embodiment is explained according to the flowchart shown in Fig. 12. The flowchart is similar to that of Fig. 2, but includes an additional step 111 between steps 109 and 110. In step 108, the application instruction execution programs are combined by the combining means 28 with the sequence program stored in the main program area 14a of the system program memory 14. At step 109, absolute head addresses of the application instruction execution programs, corresponding for example to the application instructions "SIN", "TAN" and "ASCII" set in the symbol table, are stored. The application instruction names used in the sequence program 30B are then changed (rewritten) by the address rewriting means 29, as shown at 33B to 35B in Fig. 13, to the absolute addresses in the main storage area. That is, the head absolute addresses (*e. g.* H600, H660, H6E0) of the application instruction execution programs corresponding to the application instructions "SIN", "TAN" and "ASCII" set in the symbol table are written in the sequence program.

In this embodiment, since the head addresses of the application instruction execution programs are written in the programs steps 33B to 35B of the application instructions before the execution of the sequence program, the application instruction names, such as "SIN", "TAN" and "ASCII", need not be translated using the symbol table and the execution speed of the sequence program may be increased.

## Claims

1. A programming apparatus (11) for a programmable controller (1), comprising:
a) means (17, 20) for inputting basic program instructions (32) and application instructions (33, 34, 35) to construct a sequence program (30, 30A), said application instructions (33, 34, 35) being unavailable as basic instructions for said programmable controller (1);
said application instructions (33, 34, 35) being inputted by means of their application instruction common names ("SIN", "TAN", "ASCII") and subprogram operation codes (SUB, SUBP);
b) a symbol table (30, 40) for translating between the common names of said application instructions and memory head addresses where the start of corresponding execution programs may be found;
c) means (23, 24) for discriminating said application instructions (33, 34, 35) from among the instructions contained in said sequence program (30, 30A); and
for arranging said application instruction common names of said discriminated application instructions (33, 34, 35) in said symbol table (30, 40) along with dummy addresses (FFFFH) and for displaying said application instruction common names on a display screen (18, 24);
d) auxiliary storage means (16) for storing execution programs corresponding to said inputted application instructions (33, 34, 35);
e) means (26, 105) for automatically reading from said auxiliary storage (16) those execution programs corresponding to said discriminated application instructions by their application instruction common names and for setting said memory head addresses (0600H, 0660H, 06E0H) in said symbol table (30, 40); and
f) means (28) for combining said execution programs read from auxiliary storage with said basic program instructions and with said symbol table (30, 40) to form said sequence program (30, 40, 50; 30, 30A).

2. A programming apparatus (11) according to claim 1,
**characterized** in that
said display means (18, 22) is further provided for displaying said formed sequence program (30, 40, 50; 30, 30A) on a display screen (18) thereof.

3. A programming apparatus (11) according to claim 1,
**characterized** in that
said auxiliary storage means (16) comprises a floppy disk and floppy disk drive.

4. A programming apparatus (11) according to claim 1,
**characterized** in that
said input means (17, 20) comprises a keyboard (17).

5. A programming apparatus (11) according to claim 1,
**characterized** by
an address rewriting means (29) for rewriting said application instruction common names ("SIN", "TAN", "ASCII") in said sequence program (30B, 33B, 34B, 35B) as said memory head addresses (H600, H660, H6E0) of said application instructions execution programs corresponding to said application instruction common names (SIN", "TAN", "ASCII").

6. A programming method for a programmable controller (1) comprising the following steps:
a) inputting (17, 20, 100, 101) basic program instructions (32) and application instructions (33, 34, 35) to construct a sequence program (30, 30A), said application instructions (33, 34, 35) being unavailable as basic instructions for said programmable controller (1); with
said application instructions (33, 34, 35) being inputted by means of their application instruction common names ("SIN", "TAN", "ASCII") and subprogram operation codes (SUB, SUBP);
b) discriminating (23, 24, 102) said application instructions (33, 34, 35) from among the instructions contained in said sequence program (30, 30A);
c) arranging (103) said application instruction common names of said discriminated application instructions (33, 34, 35) in a symbol table (30, 40) for translating between the common names of said application instructions and memory head addresses where the start of corresponding execution programs may be found along with dummy addresses (FFFFH);
d) displaying (104) said application instruction common names on a display screen (18, 24);
e) automatically reading (26, 105) from an auxiliary storage means (16) for storing execution programs corresponding to said inputted application instructions (33, 34, 35), those execution programs corresponding to said discriminated application instructions by their application instruction common names;
f) combining (28, 108) said execution programs read from auxiliary storage with said basic program instructions and with said symbol table (30, 40) to form said sequence program (30, 40, 50; 30, 30A); and
g) setting (109) said memory head addresses (0600H, 0660H, 06E0H) in said symbol table (30, 40).

7. A programming method according to claim 6,
wherein said sequence program (30, 30A) is displayed on the display screen (18) after step a).

8. A programming method according to claim 6,
wherein a read completion mark (*) is displayed (106) on the display screen (18) after completion of reading of said execution programs, corresponding to said displayed application instruction common names.

9. A programming method according to claim 6,
**characterized** by the step of rewriting (29, 111) said application instruction common names ("SIN", "TAN", "ASCII") in said sequence program (30B, 33B, 34B, 35B) as said memory head addresses (H600, H660, H6E0) of said application instructions execution programs corresponding to said application instruction common names (SIN", "TAN", "ASCII").

## Patentansprüche

1. Programmiervorrichtung (11) für ein programmierbare Steuereinrichtung (1), umfassend:
a) eine Einrichtung (17, 20) zum Eingeben von grundlegenden Programmbefehlen (32) und Anwendungsbefehlen (33, 34, 35) zum Zusammensetzen eines Ablaufprogramms (30, 30A), wobei die Anwendungsbefehle (33, 34, 35) als grundlegende Befehle für die programmierbare Steuereinrichtung (1) nicht verfügbar sind;
wobei die Anwendungsbefehle (33, 34, 35) mittels ihrer gemeinsamen Anwendungsbefehls-Namen ("SIN", "TAN", "ASCII") und Unterprogramm-Operationscodes (SUB, SUBP) eingegeben werden;
b) eine Symboltabelle (30, 40) zum Übersetzen zwischen den gemeinsamen Namen der Anwendungsbefehle und Speicherkopfadressen, an denen der Start von entsprechenden Ausführungsprogrammen gefunden werden kann;
c) eine Einrichtung (23, 24) zum Bestimmen der Anwendungsbefehle (33, 34, 35) aus den Befehlen, die in dem Ablaufprogramm (30, 30A) enthalten sind; und
zum Anordnen der gemeinsamen Anordnungsbefehls-Namen der bestimmten Anwendungsbefehle (33, 34, 35) in der Symboltabelle (30, 40) zusammen mit Dummy-Adressen (FFFFH) und zum Anzeigen der gemeinsamen Anwendungsbefehls-Namen auf einem Anzeigeschirm (18, 24);
d) eine Hilfsspeichereinrichtung (16) zum Speichern von Ausführungsprogrammen, die den eingegebenen Anwendungsprogrammen (33, 34, 35) entsprechen;
e) eine Einrichtung (26, 105) zum automatischen Lesen derjenigen Ausführungsprogramme, die den bestimmten Anwendungsbefehlen entsprechen, durch ihre gemeinsamen Anwendungsbefehls-Namen aus dem Hilfsspeicher (16) und zum Setzen der Speicherkopfadressen (0600H, 0660H, 06E0H) in der Symboltabelle (30, 40); und
f) eine Einrichtung (28) zum Kombinieren der aus dem Hilfsspeicher gelesenen Ausführungsprogramme mit den grundlegenden Programm-Befehlen und mit der Symboltabelle (30, 40), um das Ablaufprogramm (30, 40, 50; 30, 30A) zu bilden.

2. Programmiervorrichtung (11) nach Anspruch 1, dadurch gekennzeichnet, daß die Anzeigeeinrichtung (18, 22) ferner zum Anzeigen des gebildeten Ablaufprogramms (30, 40, 50; 30, 30A) auf einem Anzeigeschirm (18) davon vorgesehen ist.

3. Programmiervorrichtung (11) nach Anspruch 1, dadurch gekennzeichnet, daß die Hilfsspeichereinrichtung (16) eine Floppydisk und ein Floppydisk-Laufwerk umfaßt.

4. Programmiervorrichtung (11) nach Anspruch 1, dadurch gekennzeichnet, daß die Eingabeeinrichtung (17, 20) eine Tastatur (17) umfaßt.

5. Programmiervorrichtung (11) nach Anspruch 1, gekennzeichnet durch eine Adressen-Neuschreibungseinrichtung (29) zum Neuschreiben der gemeinsamen Anwendungsbefehls-Namen ("SIN", "TAN", "ASCII") in dem Ablaufprogramm (30B, 33B, 34B, 35B) als die Speicherkopfadressen (H600, H660, H6E0) der Anwendungsbefehls-Ausführungsprogramme, die den gemeinsamen Anwendungsbefehls-Namen ("SIN", "TAN", "ASCII") entsprechen.

6. Programmierverfahren für eine programmierbare Steuereinrichtung (1), umfassend die folgenden Schritte:
a) Eingeben (17, 20, 100, 101) von grundlegenden Programmbefehlen (32) und von Anwendungsbefehlen (33, 34, 35) zum Zusammenbauen eines Ablaufprogramms (30, 30A), wobei die Anwendungsbefehle (33, 34, 35) als grundlegende Befehle für die programmierbare Steuereinrichtung (1) nicht verfügbar sind;
wobei die Anwendungsbefehle (33, 34, 35) mittels ihrer gemeinsamen Anwendungsbefehls-Namen ("SIN", "TAN", "ASCII") und Unterprogramm-Operationscodes (SUB, SUBP) eingegeben werden;
b) Bestimmen (23, 24, 102) der Anwendungsbefehle (33, 34, 35) von den Befehlen, die in dem Ablaufprogramm (30, 30A) enthalten sind;
c) Anordnen (103) der gemeinsamen Anwendungsbefehls-Namen der bestimmten Anwendungsbefehle (33, 34, 35) in einer Symboltabelle (30, 40) zum Übersetzen zwischen den gemeinsamen Namen der Anwendungsbefehle und Speicherkopfadressen, an denen der Start von entsprechenden Ausführungsprogrammen zusammen mit Dummy-Adressen (FFFFH) gefunden werden können;
d) Anzeigen (104) der gemeinsamen Anwendungsbefehls-Namen auf einem Anzeigeschirm (18, 24);
e) automatisches Lesen (26, 105) aus einer Hilfsspeichereinrichtung (16) zum Speichern von Ausführungsprogrammen, die den eingegebenen Anwendungsbefehlen (33, 34, 35) entsprechen, wobei diese Ausführungsprogramme den bestimmten Anwendungsbefehlen durch ihre gemeinsamen Anwendungsbefehls-Namen entsprechen;
f) Kombinieren (28, 108) der aus dem Hilfsspeicher gelesenen Ausführungsprogramme mit den grundlegenden Programmbefehlen und mit der Symboltabelle (30, 40), um das Ablaufprogramm (30, 40, 50; 30, 30A) zu bilden; und
g) Setzen (109) der Speicherkopfadressen (0600H, 0660H, 06E0H) in der Symboltabelle (30, 40).

7. Programmierverfahren nach Anspruch 6, dadurch gekennzeichnet, daß das Ablaufprogramm (30, 30A) auf dem Anzeigeschirm (18) nach dem Schritt a) angezeigt wird.

8. Programmierverfahren nach Anspruch 6, dadurch gekennzeichnet, daß eine Lesebeendigungsmarke (*) auf dem Anzeigeschirm (18) nach Abschluß eines Lesevorgangs der Ausführungsprogramme entsprechend der angezeigten gemeinsamen Anwendungsbefehl-Namen angezeigt wird (106).

9. Programmierverfahren nach Anspruch 6, gekennzeichnet durch den Schritt eines Neuschreibens (29, 111) der gemeinsamen Anwendungsbefehls-Namen ("SIN", "TAN", "ASCII") in dem Ablaufprogramm (30B, 33B, 34B, 35B) als die Speicherkopfadressen (H600, H660, H6E0) der Anwendungsbefehls-ausführungsprogramme, die den gemeinsamen Anwendungsbefehls-Namen ("SIN", "TAN", "ASCII") entsprechen.

## Revendications

1. Appareil de programmation (11) pour une unité de commande programmable (1), comportant:
a) des moyens (17, 20) pour introduire des instructions (32) d'un programme de base et des instructions d'application (33, 34, 35), pour construire un programme séquentiel (30, 30A), lesdites instructions d'application (33, 34, 35) n'étant pas disponibles comme instructions de base pour ladite unité de commande programmable (1);
lesdites instructions d'application (33, 34, 35) étant introduites au moyen de leurs noms communs d'instruction d'application ("SIN", "TAN", "ASCII") et de leur code opération de sous-programme (SUB, SUBP);
b) une table de symboles (30, 40) pour assurer une traduction des noms communs desdites instructions d'application en adresses de début de mémoire, où peut être trouvé le début des programmes d'exécution correspondants;
c) des moyens (23, 24) pour distinguer lesdites instructions d'application (33, 34, 35) parmi les instructions contenues dans ledit programme séquentiel (30, 30A); et
pour disposer lesdits noms communs d'instructions d'application desdites instructions d'application (33, 34, 35) distinguées, dans ladite table de symboles (30, 40), en même temps que des adresses fictives (FFFFH), et pour afficher lesdits noms communs desdites instructions d'application sur un écran d'affichage (18, 24);
d) un moyen de mémorisation auxiliaire (16) pour conserver des programmes d'exécution correspondants auxdites instructions d'application (33, 34, 35) introduites;
e) un moyen (26, 105) pour lire automatiquement dans ladite mémoire auxiliaire (16) les programmes d'exécution correspondants auxdites instructions d'application distinguées, par leurs noms communs d'instruction d'application, et pour placer lesdites adresses de début de mémoire (0600H, 0660H, 06E0H) dans ladite table de symboles (30, 40); et
f) un moyen (28) pour combiner lesdits programmes d'exécution lus dans la mémoire auxiliaire avec lesdites instructions du programme de base et avec ladite table de symboles (30, 40), pour former ledit programme séquentiel (30, 40, 50; 30, 30A).

2. Appareil de programmation (11) selon la revendication 1, caractérisé en ce que ledit moyen d'affichage (18, 22) est en outre prévu pour afficher ledit programme séquentiel formé (30, 40, 50; 30, 30A) sur un écran d'affichage (18) qu'il comprend.

3. Appareil de programmation (11) selon la revendication 1, caractérisé en ce que ledit moyen de mémorisation auxiliaire (16) comprend une disquette et un lecteur de disquette.

4. Appareil de programmation (11) selon la revendication 1, caractérisé en ce que lesdits moyens d'introduction (17, 20) comprennent un clavier (17).

5. Appareil de programmation (11) selon la revendication 1, caractérisé par un moyen (29) de réécriture d'adresses, pour réécrire lesdits noms communs d'instructions d'application ("SIN", "TAN", "ASCII") dans ledit programme séquentiel (30B, 33B, 34B, 35B) en tant que dites adresses de début de mémoire (H600, H660, H6E0) desdits programmes d'exécution des instructions d'application qui correspondent auxdits noms communs d'instructions d'application ("SIN", "TAN", "ASCII").

6. Procédé de programmation d'une unité de commande programmable (1), comprenant les étapes ci-dessous:
a) introduire (17, 20, 100, 101) des instructions (32) de programme de base et des instructions d'application (33, 34, 35), pour construire un programme séquentiel (30, 30A), lesdites instructions d'application (33, 34, 35) n'étant pas disponibles comme instructions de base pour ladite unité de commande programmable (1); tandis que
lesdites instructions d'application (33, 34, 35) sont introduites au moyen de leurs noms communs d'instructions d'application ("SIN", "TAN", "ASCII") et de codes opérations de sous-programmes (SUB, SUBP);
b) distinguer (23, 24, 102) lesdites instructions d'application (33, 34, 35) parmi les instructions contenues dans ledit programme séquentiel (30, 30A);
c) disposer (103) lesdits noms communs d'instructions d'application desdites instructions d'application (33, 34, 35) distinguées dans une table de symboles (30, 40), pour traduire les noms communs desdites instructions d'application en adresses de début de mémoire où peut être trouvé le début de programmes d'exécution correspondants en même temps que des adresses fictives (FFFFH);
d) afficher (104) lesdits noms communs d'instructions d'application sur un écran d'affichage (18, 24);
e) lire automatiquement (26, 105) dans un moyen de mémorisation auxiliaire (16) servant à conserver des programmes d'exécution correspondants auxdites instructions d'application (33, 34, 35) introduites, les programmes d'exécution correspondants auxdites instructions d'application distinguées, par leurs noms communs d'instructions d'application;
f) combiner (28, 108) lesdits programmes d'exécution lus dans la mémoire auxiliaire avec lesdites instructions du programme de base et ladite table de symboles (30, 40), pour former ledit programme séquentiel (30, 40, 50; 30, 30A); et
g) placer (109) lesdites adresses de début de mémoire (0600H, 0660H, 06E0H) dans ladite table de symboles (30, 40).

7. Procédé de programmation selon la revendication 6, dans lequel ledit programme séquentiel (30, 30A) est affiché sur l'écran d'affichage (18) après l'étape a).

8. Procédé de programmation selon la revendication 6, dans lequel une marque de fin de lecture (*) est affichée (106) sur l'écran d'affiahage (18) lorsque la lecture desdits programmes d'exécution, qui correspondent auxdits noms communs d'instructions d'application affichés, est terminée.

9. Procédé de programmation selon la revendication 6, caractérisé par l'étape consistant à réécrire (29, 111) lesdits noms communs d'instructions d'application ("SIN", "TAN", "ASCII") dans ledit programme séquentiel (30B, 33B, 34B, 35B) en tant que dites adresses de début de mémoire (H600, H660, H6E0) desdits programmes d'exécution d'instructions d'application qui correspondent auxdits noms communs d'instructions d'application ("SIN", "TAN", "ASCII").
